# EUROPÄISCHE PATENTSCHRIFT

(11) **EP 1 590 155 B1**
(45) Veröffentlichungstag und Bekanntmachung des Hinweises auf die Patenterteilung: **21.07.2010**
(21) Anmeldenummer: 04707181.6
(22) Anmeldetag: 02.02.2004
(51) Int. Cl.: B29C 45/33

(54) **SCHIEBER-HYDRAULIK**
HYDRAULIC SYSTEM FOR A SLIDE
SYSTEME HYDRAULIQUE POUR COULISSEAU

(30) Priorität: 03.02.2003 CH 1552003
(43) Veröffentlichungstag der Anmeldung: 02.11.2005
(73) Patentinhaber: Otto Hofstetter AG, 8730 Uznach (CH)
(72) Erfinder: HOFSTETTER, Otto, CH-8730 Uznach (CH); FERNANDEZ, Luis, CH-8730 Uznach (CH)
(74) Vertreter: Alder, Hans Rudi
(86) Internationale Anmeldenummer: PCT/CH2004/000055
(87) Internationale Veröffentlichungsnummer: WO 2004/068927

(56) Entgegenhaltungen:
- EP-A- 0 647 514
- EP-A- 0 873 840
- CA-A- 2 230 703
- US-A- 3 947 203
- US-A- 4 571 171
- US-A- 5 736 173
- US-A1- 2001 038 163
- PATENT ABSTRACTS OF JAPAN vol. 018, no. 435 (M-1655), 15. August 1994 (1994-08-15) -& JP 06 134756 A (MITSUBISHI PLASTICS IND LTD), 17. Mai 1994 (1994-05-17)

## Beschreibung

Die vorliegende Erfindung betrifft eine mehrteilige Patrizenplatte für ein Formwerkzeug zum Spritzgiessen von Formlingen gemäss Oberbegriff des Anspruchs 1.

Derartige Patrizenplatten werden in Spritzgiess-Formwerkzeugen verwendet, wie sie beispielsweise in der EP 0 647 514 beschrieben sind und umfassen eine Grundplatte und eine mit einem Schieber versehene Abstreifplatte, wobei der Schieber mehrere trennbare Patrizenkonusse trägt. Beim Öffnen eines derartigen Formwerkzeugs wird die mehrteilige Patrizenplatte zurückgezogen, um die frisch gespritzten Formlinge, insbesondere Vorformlinge freizulegen, d.h. aus der Matrizenplatte zu ziehen. Zur Entnahme der Vorformlinge wird zwischen die Patrizenplatte und die Matrizenplatte eine Entnahmevorrichtung eingebracht, wie sie beispielsweise in der EP 0 907 488 beschrieben ist. Um die Vorformlinge entnehmen zu können, wird die mit dem Schieber versehene Abstreifplatte von der Grundplatte getrennt und wird der Schieber über einen Schrägfingerzug geführt. Dadurch werden die diversen Patrizenkonusse geöffnet und können die Vorformlinge in die Entnahmevorrichtung überführt werden. Dazu wird Pressluft verwendet, mit welcher die Vorformlinge aus den geöffneten Patrizenkonussen geworfen werden. Die Länge der Vorformlinge, in der Regel 8 bis 12 cm, erlaubt es, die Vorformlinge in die Entnahmevorrichtung einzuführen, bevor die diversen Patrizenkonusse vollständig geöffnet werden. Dies gewährleistet eine sichere Übergabe der Vorformlinge vom Patrizenkonus zur Entnahmevorrichtung.

Es zeigt sich nun, dass bei der Entnahme von besonders kurzen Vorformlingen, d.h. Vorformlingen mit einer Länge von ca. 3 bis 5 cm, die sichere Aufnahme der Vorformlinge in die jeweiligen Entnahmehülsen der Entnahmevorrichtung nicht mehr gewährleistet ist, weil die Entnahmehülsen der Entnahmevorrichtung nicht nahe genug an das äussere Ende der Vorformlinge geführt werden können, respektive weil der trennbare Patrizenkonus einen relativ langen Öffnungsweg aufweist, beispielsweise ca. 5 cm oder mehr.

Es ist deshalb Aufgabe der vorliegenden Erfindung, eine Vorrichtung zu schaffen, mit welcher auch verhältnismässig kurze Vorformlinge in sicherer Weise entnommen werden können.

Diese Aufgabe wird erfindungsgemäss durch eine Patrizenplatte mit den Merkmalen des Anspruchs 1 gelöst.

Mit der erfindungsgemässen Patrizenplatte werden die frisch gespritzten Vorformlinge so lange gehalten, bis diese in eine Entnahmehülse der Entnahmevorrichtung ragen und dort sicher geführt werden. Erst dann werden die Patrizenkonusse erfindungsgemäss mit Hilfe eines hydraulischen Antrieb, anstatt mit Hilfe eines Schrägfingerzuges, vollständig geöffnet und können die Vorformlinge sicher in die Entnahmehülsen gesaugt werden. Es versteht sich, dass das Öffnen der Patrizenkonusse so frühzeitig wie möglich eingeleitet wird, um die Zykluszeit des Werkzeuges so kurz wie möglich halten zu können.

Die Vorteile einer derartigen Patrizenplatte sind dem Fachmann unmittelbar ersichtlich und liegen insbesondere in der Verkürzung des Öffnungsweges für das Öffnen des Patrizenkonus. Weitere Vorteile sind darin zu sehen, dass die für die Entnahme der Vorformlinge in der Regel verwendete Pressluft nicht mehr verwendet werden muss und damit auch die von dieser Pressluft erzeugte Kontamination der Vorformlingen vermieden werden kann.

Weitere vorteilhafte Ausführungsformen der vorliegenden Erfindung weisen die Merkmale der Unteransprüche auf.

In einer ersten bevorzugten Ausführungsform ist der hydraulische Antrieb am Schieber befestigt und stützt sich gegen die Abstreifplatte ab. Es versteht sich, dass der hydraulische Antrieb auch an der Abstreifplatte befestigt sein kann und den Schieber von dort aus betätigt.

Vorrichtungen, bei welchen ein hydraulischer Antrieb verwendet wird, um die Vorformlinge auszuwerfen, sind beispielsweise aus der US-4'571'171 bekannt Dazu ist jedes der beiden Patrizenkonushälften mit einem Bolzen versehen, der in schräg verlaufende Ausnehmungen eines Schiebers ragen. Bei geöffnetem Werkzeug werden die Schieber mit Hilfe eines hydraulischen Antriebs quer zur Arbeitsrichtung bewegt, was dazu führt, dass die in den jeweiligen Ausnehmungen liegenden Bolzen verschoben und die Patrizenkonushälften getrennt werden, um den Vorformling freizugeben.

In einer bevorzugten Ausführungsform dient der hydraulische Antrieb dem vollständigen Öffnen der Patrizenkonusse und ist eine Rückstellfeder vorgesehen, welche die geöffneten Patrizenkonussen wieder schliesst. Natürlich ist es dem Fachmann freigestellt, die Patrizenkonusse mittels Federkraft zu öffnen und mit Hilfe des hydraulischen Antriebs zu schliessen. Erfindungsgemäß ist der Schrägfingerzug an einer Stelle zwischen einer Trennstellung und einer Entnahmestellung mit einer Stufe versehen, welche den Schieber um einen Ausklebehub verschiebt. Mit diesem Ausklebehub von weniger als 1 mm wird der Vorformling lediglich von dem jeweiligen Patrizenkonus gelöst, um zu verhindern, dass der Vorformling beim vollständigen Öffnen der Patrizenkonusse an einer Hälfte dieser Patrizenkonusse kleben bleibt.

Im folgenden wird die Erfindung anhand von einem Ausführungsbeispiel und mit Hilfe der Figuren näher beschrieben. Es zeigen:
- Fig. 1: eine Patrizenplatte bekannter Art in Entnahmestellung ;
- Fig. 2: eine erfindungsgemässe Patrizenplatte in Entnahmestellung.

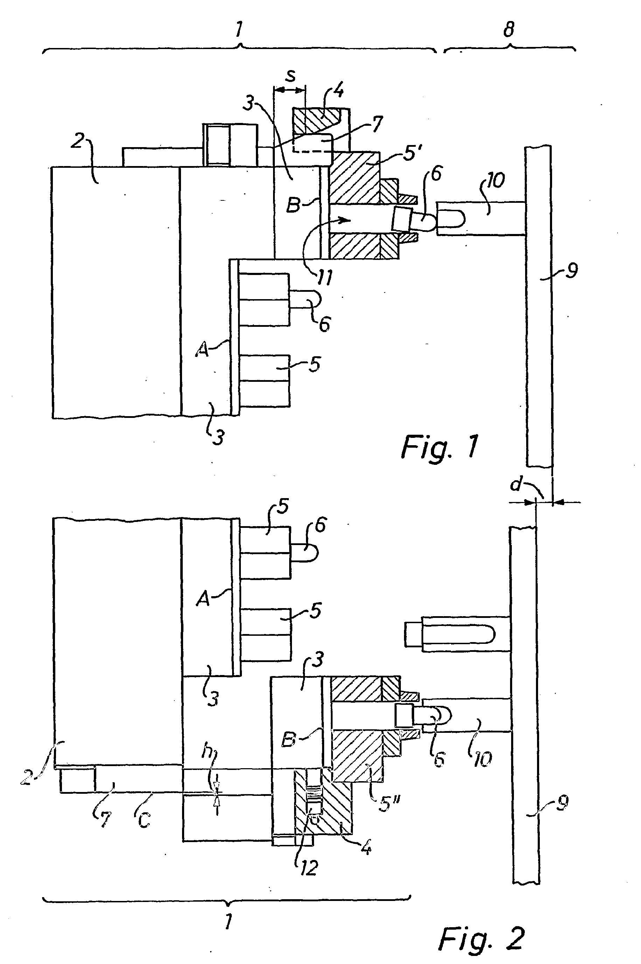

Figur 1 zeigt eine mehrteilige Matrizenplatte bekannter Art, welche eine Grundplatte 2, eine Abstreifplatte 3 sowie einen Schieber 4 umfasst. Dieser Schieber 4 trägt verschiedene trennbare Patrizenkonusse 5, 5'. Beim Öffnen des Formwerkzeuges wird die gesamte Patrizenplatte 1 zurückgezogen, um die Vorformlinge 6 aus der Matrize (nicht dargestellt) zu ziehen. In einem weiteren Zyklusschritt wird die Abstreifplatte 3 von einer Trennstellung A in eine Entnahmestellung B gebracht. Dabei läuft der Schieber 4 über einen, mit der Grundplatte 2 fest verbundenen Schrägfingerzug 7, durch welchen ein Öffnungsweg s vorgegeben ist. Dabei werden die Patrizenkonusse 5 vollständig geöffnet. Diese vollständig geöffneten Patrizenkonusse weisen das Referenzzeichen 5' auf. Figur 1 macht deutlich, dass beim Öffnen der Patrizenkonusse 5 die einzelnen Vorformlinge 6 nicht mehr sicher gehalten werden und sich in der Entnahmestellung B der Patrizenkonusse 5' verkanten können und deshalb nicht mehr entnommen werden können. Um die Entnahme der Vorformlinge 6 zu bewerkstelligen, wird bei diesen bekannten Werkzeugen Druckluft 11 in den geöffneten Patrizenkonus 5' gebracht. Diese Druckluft führt in der Regel Schmutzrespektive Ölpartikel mit sich und kontaminiert die frisch gespritzten Vorformlinge. Figur 1 macht darüber hinaus deutlich, dass die Patrizenkonusse 5' in der Entnahmestellung B und die Entnahmevorrichtung 8 respektive deren Entnahmeplatte 9 und Entnahmehülse 10 nicht näher zu einander gebracht werden können, da bei einer allfälligen erfolgten Entnahme des Vorformlings dieser beim Rückführen der Abstreifplatte 3 wieder vom sich schliessenden Patrizenkonus 5' erfasst würde und aus der Entnahmehülse 10 gezogen würde.

Figur 2 zeigt eine erfindungsgemässe Anordnung für die Patrizenplatte 1, wiederum mit trennbaren Patrizenkonussen 5 in ihrer Trennstellung A, sowie einen geöffneten Patrizenkonus 5' in Entnahmestellung B. Die Grundplatte 2 weist einen seitlich angeordneten Schrägfingerzug 7 auf, welcher lediglich an der Stelle C eine Schwelle zur Erzeugung eines Ausklebehubs h aufweist. Mit diesem Ausklebehub h sollen die Formlinge von den Patrizenkonussen lediglich gelöst werden, um zu gewährleisten, dass die Formlinge beim vollständigen Öffnen der Patrizenkonusse (5) nicht an diesen haften bleiben. Auf der Abstreifplatte 3 ist der Schieber 4 bewegbar befestigt, welcher Schieber die trennbaren Patrizenkonusse 5 trägt. Im Bereich der Entnahmestellung B wird der Patrizenkonus 5 mit Hilfe eines hydraulischen Antriebs 12 geöffnet. Dieser hydraulische Antrieb 12 ist in der vorliegenden Ausführungsform am Schieber 4 befestigt und stützt sich an der Abstreifplatte 3 ab.

Figur 2 macht deutlich, dass der Öffnungsweg s durch die Verwendung eines hydraulischen Antriebs wesentlich verkürzt werden kann und damit die Vorformlinge 6 in die Entnahmehülsen 10 der Entnahmevorrichtung 8 gebracht werden können, bevor die Patrizenkonusse 5 vollständig geöffnet sind. Dieser verkürzte Öffnungsweg erlaubt es darüber hinaus, die Entnahmeptatte 9 der Entnahmevorrichtung 8, respektive die Entnahmehülsen 10 um eine Distanz d näher an die vollständig geöffneten Patrizenkonusse 5' heranzuführen. Damit kann eine sichere Entnahme auch von extrem kurzen Vorformlingen 6 gewährleistet werden. Darüber hinaus kann auf die Verwendung von Druckluft zur Überführung der Vorformlinge verzichtet werden und die damit verbundene Kontamination vermieden werden. Vorteilhafterweise werden die Patrizenkonusse 5' während eines nächsten Zyklusschrittes mit Hilfe einer, am Schieber 4 angreifenden Rückstellfeder wieder in Schliessstellung gebracht.

## Patentansprüche

1. Mehrteilige Patrizenplatte (1) für ein Formwerkzeug zum Spritzgiessen von Formlingen (6), insbesondere Vorformlingen aus PET, welche Patrizenplatte (1) eine Grundplatte (2) und eine Abstreifplatte (3) mit einem Schieber (4) umfasst, auf welchem Schieber (4) mehrere trennbare Patrizenkonusse (5, 5') angebracht sind, wobei mindestens ein hydraulischer Antrieb (12) zum vollständigen Öffnen der Patrizenkonusse (5, 5') vorgesehen ist, **dadurch gekennzeichnet, dass** an der Grundplatte (2) ein Schräfingerzug (7) angebracht ist, durch welchen der Schieber (4) derart betätigbar ist, dass dieser Schieber (4) an einer Stelle (C) zwischen einer Schliessstellung (A) und einer Entnahmestellung (B) die Patrizenkonusse(5, 5') lediglich um einen Ausklebehub (h) öffnet.

2. Patrizenplatte gemäss Anspruch 1, **dadurch gekennzeichnet, dass** der hydraulische Antrieb (12) am Schieber (4) befestigt ist und sich gegen die Abstreifplatte (3) abstützt.

3. Patrizenplatte gemäss Anspruch 1, **dadurch gekennzeichnet, dass** der hydraulische Antrieb (12) mit einer Rückstellfeder zusammenwirkt.

4. Patrizenplatte gemäss Anspruch 1, **dadurch gekennzeichnet, dass** der hydraulische Antrieb(12) zum Öffnen der Patrizenkonusse (5, 5') mit einem zweiten hydraulischen Antrieb zusammenwirkt.

## Claims

1. Multipart male mold plate (1) for a form tool for injection-molding of molded articles, in particular PET preforms (6), said male mold plate (1) comprising a base plate (2) and a stripper plate (3) having a slide (4), on which slide (4) there is provided a plurality of separable male mold cones (5, 5'), whereby there is provided at least one hydraulic drive (12) for completely opening the male mold cones (5, 5"), **characterised in that** an inclined drag element (7) is secured to the base plate (2), by means of which the slide (4) is activatable in such a way that said slide (4) opens the male mold cones (5, 5') merely for a detachment stroke (h) at a position (C) between a closing position (A) and an extraction position (B).

2. Male mold plate according to claim 1, **characterised in that** the hydraulic drive (12) is secured to the slide (4) and rests against the stripper plate (3).

3. Male mold plate according to claim 1, **characterised in that** the hydraulic drive (12) cooperates with a pull-back spring.

4. Male mold plate according to claim 1, **characterised in that** the hydraulic drive (12) cooperates with a second hydraulic drive for opening the male mold cones (5, 5').

## Revendications

1. Plaque de poinçon (1) en plusieurs parties pour un outil de formage servant au moulage par injection d'ébauches (6), notammant de préformes en PET, laquelle plaque de poinçon (1) comprend une plaque de base (2) et une plaque d'éjection (3) comportant un coulisseau (4), coulisseau (4) sur lequel plusieurs poinçons coniques (5, 5') séparables sont placés, au moins une commande hydraulique (12) étant prévue pour l'ouverture totale des poinçons coniques (5, 5'), **caractérisée par le fait que** la plaque de base (2) est pourvue d'un élément de traction incliné (7) grâce auquel le coulisseau (4) peut être actionné de manière à ce que ce coulisseau (4) n'ouvre les poinçons coniques (5, 5') que sur une course de décollement (h) à un endroit (C) entre une position de fermeture (A) et une position de prélèvement (B).

2. Plaque de poinçon selon la revendication 1, **caractérisée en ce que** la commande hydraulique (12) est fixée sur le coulisseau (4) et s'appuie contre la plaque d'éjection (3).

3. Plaque de poinçon selon la revendication 1, **caractérisée en ce que** la commande hydraulique (12) coopère avec un ressort de rappel.

4. Plaque de poinçon selon la revendication 1, **caractérisée en ce que** la commande hydraulique (12) coopère avec une seconde commande hydraulique pour l'ouverture des poinçons coniques (5, 5').
